# EUROPEAN PATENT APPLICATION

(11) **EP 1 641 266 A2**
(43) Date of publication of application: **29.03.2006**
(21) Application number: 05015535.7
(22) Date of filing: 18.07.2005
(51) Int. Cl.: H04N 7/173

(54) **System and method for providing advertisement music**

(30) Priority: 24.09.2004 KR 2004077014
(71) Applicant: LG Electronics, Inc., Seoul (KR)
(72) Inventor: Park, Yong Soo, Yangju-si Gyeonggi-do (KR)
(74) Representative: Zech, Stefan Markus

(57) **Abstract**

Provided is a system and method for providing a user with a music file or detailed information about music contained in a broadcast advertisement. In the method, a broadcast advertisement including music and a program ID is broadcast at a broadcasting station. A download request signal including the program ID and a user ID is transmitted from a display device to the broadcasting station so as to download the music of the broadcast advertisement. A music file stored in the broadcasting station is detected on the basis of the program ID received from the display device. The detected music file is transmitted from the broadcasting station to the display device.

## Description

This application claims the benefit of the Korean Patent Application No. 10-2004-0077014, filed on September 24, 2004, which is hereby incorporated by reference.

### BACKGROUND OF THE INVENTION

### Field of the Invention

The present invention relates to a broadcasting system, and more particularly, to a system and method for providing a user with advertisement music inserted into a broadcast advertisement.

### Discussion of the Related Art

With the rapid development of electrical technology, electronic technology, computer technology, communication technology, multimedia technology for combining various data such as video data and audio data, and IT technology, the storage/existence type of information is changed from an analogue form into a digital form.

With the development of the moving picture experts group (MPEG) technology for compressing digital image data having a relatively large amount of data, the digital image data can be reduced in size. The MPEG technology is applied to almost all the technology fields such as a computer, broadcasting, home appliances, and communication, and a digital video/audio service can be accordingly provided. Consequently, digital devices for providing the digital video/audio service has appeared and developed.

Among them, a television (TV) plays an important role as an information transmitting medium in everyday life. There has recently developed a digital TV that can provide a lot of information more rapidly and stably by transmitting video/audio data compressed through the MPEG technology. Accordingly, users can conveniently view more broadcasting that provides a clearer picture quality and a more vivid sound.

The digital TV has 4-8 times capacity of the existing analog TV, and thus can provide various supplementary services such as sports, movie, home shopping, and music. Also, a variety of broadcasting such as terrestrial broadcasting, cable broadcasting, and VOD broadcasting can be provided for users.

One channel of the terrestrial broadcasting system has a bandwidth of 6, 7 or 8 MHz. The existing analogue broadcasting system transmits video/audio signals on a channel having a bandwidth of 6, 7 or 8 MHz, and can transmit only one broadcasting signal on one channel.

However, the digital broadcasting system converts analogue vide/audio signals into digital data, compresses the resulting digital video/audio data through the MPEG technology, multiplexes several broadcasting data, constructs several virtual channels in one physical channel, and transmits the multiplexed digital video/audio data on the virtual channels.

Accordingly, while the existing analog broadcasting system can transmit only one broadcasting signal on one channel, the digital broadcasting system can transmit several broadcasting signals on one channel. That is, the digital broadcasting system can provide multichannel broadcasting.

Meanwhile, users view various broadcast advertisements while viewing various broadcasting programs through a digital TV. In general, one broadcast advertisement has a broadcasting time duration of one minute or shorter, and a specific music is inserted into the broadcast advertisement so as to maximize the effect of the advertisement.

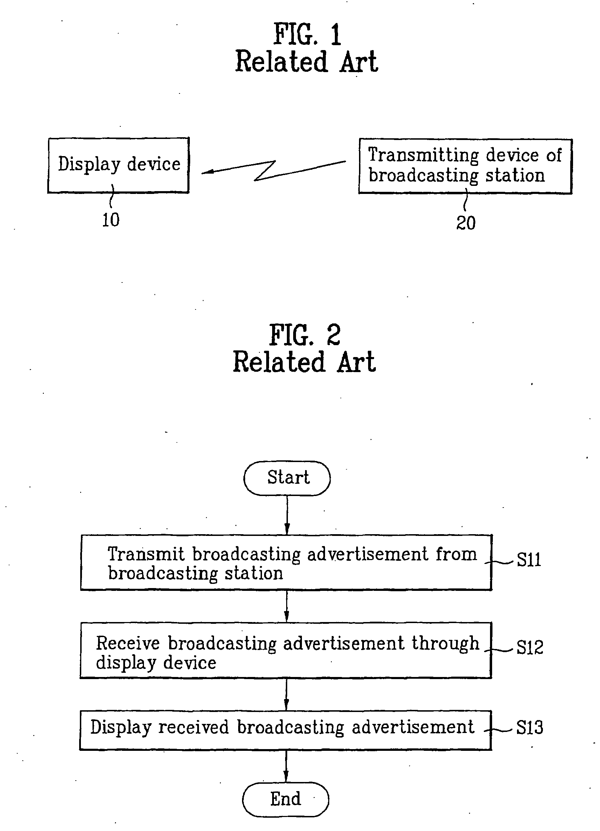

FIG. 1 illustrates a block view showing a structure of a related art broadcasting system that provides broadcast advertisement. FIG. 2 illustrates a flow chart of a related art method for providing broadcast advertisement. Generally, a display device 10 includes a tuner, a demultiplexer, a video processor, and an audio processor. The tuner is used to select a broadcasting signal. The demultiplexer separates the broadcasting signal to a video signal, an audio signal, and a data signal. The video processor converts the video signal to a displayable signal, and the audio processor converts the audio signal to an audible signal that can be heard through a speaker.

Referring to FIG. 2, when a transmitting device 20 of the broadcasting station transmits a broadcasting advertisement including music and text messages through air wave (S11), the display device 10 receives the broadcasting advertisement (S12). Thereafter, the display device 10 separates the received broadcasting advertisement to a video signal and an audio signal and displays the video signal onto a screen and outputs the audio signal through a speaker (S13).

The received broadcasting advertisement includes only a part of the music due to the time limitation in any broadcasting advertisements. However, users can listen to only a part of music contained in the broadcast advertisement, and must individually take a lot of time and effort so as to find out the whole advertisement music. More specifically, since the related art digital broadcasting system does not provide the whole music file and detailed information on the advertisement music, it is difficult for users to fully enjoy the advertisement music.

### SUMMARY OF THE INVENTION

Accordingly, the present invention is directed to a system and method for providing advertisement music that substantially obviates one or more problems due to limitations and disadvantages of the related art.

An object of the present invention is to provide a system and method for providing a user with a music file or detailed information about music contained in a broadcast advertisement.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

One or more of these and other aspects of the present invention may be accomplished by a method for providing advertisement music, the method comprising the steps of broadcasting a broadcast advertisement at a broadcasting station, the broadcast advertisement including music and a program ID (identification); transmitting a download request signal from a display device to the broadcasting station so as to download the music of the broadcast advertisement, the download request signal including the program ID and a user ID; detecting a music file stored in the broadcasting station on the basis of the either the program ID or the user ID received from the display device; and transmitting the detected music file from the broadcasting station to the display device.

One or more of these and other aspects of the present invention may be accomplished by a a display device for transmitting a download request signal to a broadcasting station server so as to download music contained in a broadcast advertisement, the download request signal including a user ID and a program ID contained in the broadcast advertisement; a database for storing music files related to the broadcast advertisement; and the broadcasting station server for detecting a corresponding music file from the database on the basis of the program ID received from the display device, and transmitting the detected music file to the display device.

One or more of these and other aspects of the present invention may be accomplished by a method for obtaining advertisement music, the method comprising the steps of transmitting a download request signal from a display device to a broadcasting station broadcasting an advertisement having music and a program ID, the download request signal including the program ID and a user ID; detecting a music file stored in the broadcasting station on the basis of the either the program ID or the user ID received from the display device; and transmitting the detected music file from the broadcasting station to the display device.

The download request signal may be transmitted via the Internet to a server of the broadcasting station.

The detected music file may be transmitted from the broadcasting station to the display device on a broadcast channel or via the Internet.

The method may further include the steps of:
detecting music information stored in the broadcasting station on the basis of the program ID received from the display device; and transmitting the detected music information to the display device.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIG. 1 illustrates a conventional broadcasting system;

FIG. 2 illustrates a flow chart of a conventional method for providing broadcast advertisement;

FIG. 3 is a block diagram of a system for providing advertisement music according to the present invention;

FIG. 4 is a flowchart illustrating a method for downloading advertisement music according to the present invention;

FIG. 5 illustrates a picture containing detailed information of advertisement music; and

FIG. 6 is a flowchart illustrating a method for providing advertisement music according to the present invention used by a service provider.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

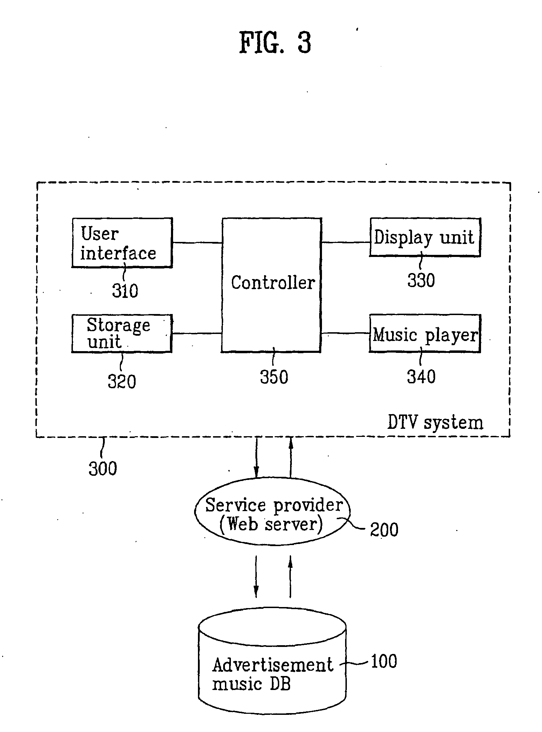

FIG. 3 is a block diagram of a system for providing advertisement music according to the present invention.

Referring to FIG. 3, the inventive advertisement music providing system includes a database 100 for storing a music file and detailed information of advertisement music contained in a broadcasting advertisement, a service provider 200 for providing a music file and detailed information of corresponding advertisement music stored in the database 100 according to a user request, and a broadcast receiver 300 for requesting the downloading of advertisement music contained in an broadcast advertisement currently displayed or already displayed and storing a music file and detailed information of advertisement music provided by the service provider 200 according to the user request. The broadcast receiver 300 may be a device capable of receiving a broadcast signal, such as a digital TV, an Internet TV, and a digital multimedia broadcasting (DMB) terminal.

The database 100 stores an actual music file and detailed information of advertisement music according to respective advertisement broadcast programs. The detailed information includes an advertisement title, a music title, a name of a singer, and a service fee.

The service provider 200 may be a Web server for providing a digital broadcasting service. The service provider 200 generates digital broadcast programs provided by broadcasters, service information, and supplementary information necessary for demultiplexing and reconstructing the broadcast programs and the service information. The data information (i.e., supplementary information) includes electronic newspaper services, magazine services, and weather information service. The supplementary information includes program guide data, such as a program identification (ID), a channel ID, a program title, a program summary, and the selection or not of a caption service.

At this time, the service provider 200 compresses and codes the broadcast program and the service information through the MPEG (moving picture expert group) technology, adds the data information to the coded broadcast program and the coded service information, and then transmits the resulting signals to the digital TV 300 on a carrier channel in a packet stream.

Also, the service provider 200 compresses/codes an advertisement music file through the MPEG2 scheme or through the MPEG4 scheme, and compresses/codes detailed information of advertisement music through the text compressing scheme.

Although part of the digital television is not shown, an operation of the digital TV 300 will now be described with reference to FIG. 3.

Referring to FIG. 3, a demodulator (not shown) of the digital TV is automatically tuned to a carrier channel containing a broadcast channel to thereby receive a multiplexed packet stream, separates the broadcast program and the data information contained in the multiplexed packet stream, and then provides the separated data information to a controller 350.

The controller 350 searches a default broadcast channel or a broadcast channel selected by a user by detecting/analyzing an program ID contained in the supplementary information, and then controls a tuner and a demodulator (not shown) to provide only the program information of the searched broadcast channel to an MPEG decoder (not shown).

The MPEG decoder decodes a broadcast program provided from the tuner and the demodulator through the MPEG scheme, and then outputs audio data and video data of the decoded broadcast program respectively to an audio outputting unit and a video display unit.

The digital TV 300 provides a user interface such as a hotkey or a menu for directly inputting an advertisement music download request command so that a user can send a request for the downloading of advertisement music inserted into an broadcast advertisement to the service provider 200 during or after the viewing of a TV broadcast advertisement.

The digital TV 300 includes a user interface 310 for inputting an advertisement music download request command, a storage unit 320 for storing a music file and detailed information of advertisement music provided from the service provider 200 according to a user request, a display unit 330 for displaying the detailed information stored in the storage unit 320, a music player 340 for playing the music file stored in the storage unit 320, and a controller 350 for receiving the music file and the detailed information and controlling the music player 340 to play the music file.

The digital TV 300 having the above-described structure uses a system ID (specific number) or a user ID assigned by the service provider 200 so as to receive an advertisement music download service from the service provider 200.

The service provider 200 transmits the system ID or the user ID to the controller 350 via a network such as the Internet or via a broadcast transmitter (not shown). The digital TV 300 includes a communication unit (not shown) such as a modem so as for the controller 350 to receive the system or user ID. The controller 350 stores the system or user ID in the storage unit 320.

When a user requests the downloading of advertisement music through user interface 310, the controller 350 transmits the stored system or user ID and a program ID of a corresponding broadcast advertisement to the service provider 200, together with a download request signal. At this time, the controller 350 transmits the. download request signal to the service provider 200 via a network such as the Internet.

Upon receiving the program ID, the system ID, and the download request signal from the controller 350, the service provider 200 searches a broadcast advertisement corresponding the received program ID and transmits a music file inserted into the searched broadcast advertisement to the digital TV 300 having the received system ID in a packet stream.

The controller 350 of the digital TV 300 checks the system ID assigned by the service provider 200 by searching the storage unit 320, and then receives only a packet stream having an ID identical to its own system ID from the service provider 200.

Thereafter, in accordance with the user' s request the controller 350 stores a music file provided from the service provider 200 in the storage unit 320. The controller reads out the music file from the storage unit 320 and plays the music file through the music player 340.

A user may also request the selective transmission of the music file in response to a user input or command, wherein the music file is selected according to at least one subcategory of the group consisting of an advertisement title, a music title, an artist ID and a service fee. The actual music file may be selected among several music files grouped according to music title, artist ID, advertisement title or service fee thereby providing a user with additional options in music file selection. For example, upon identification of a music file corresponding to a broadcasted advertisement, other versions of the same music title by other artists may be available for downloading.

Reference will now be made in detail to a method for providing advertisement music according to an embodiment of the present invention.

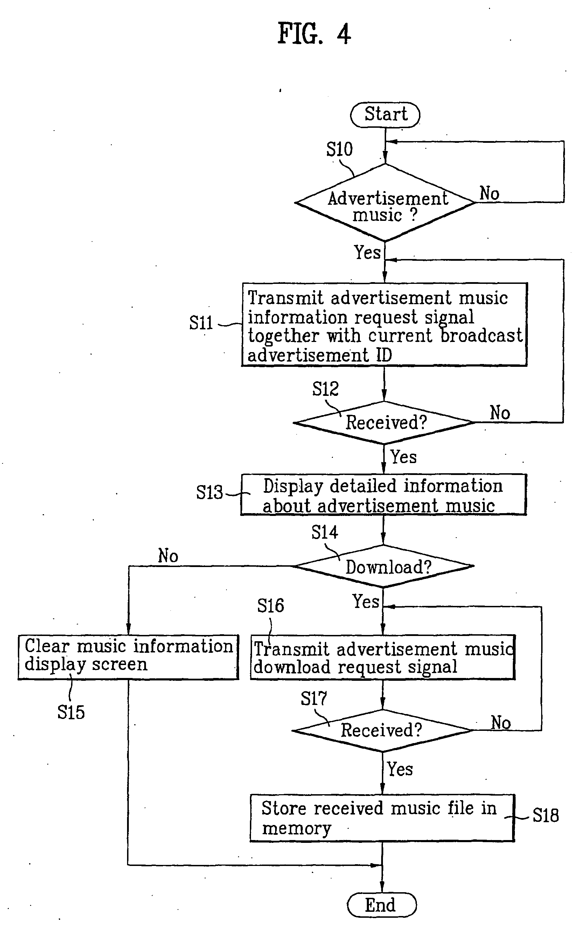

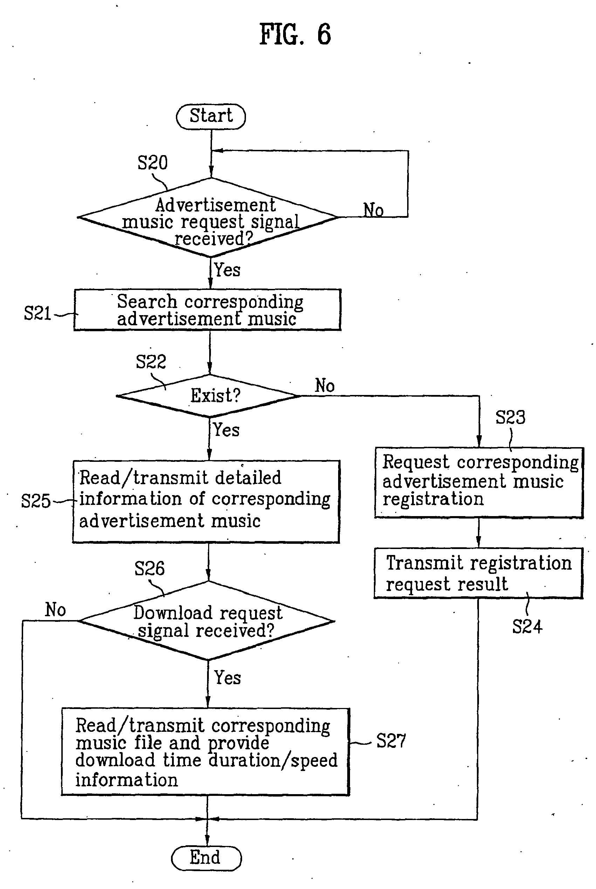

FIG. 4 is a flowchart illustrating an inventive method for downloading advertisement music, and FIG. 6 is a flowchart illustrating an inventive method for providing advertisement music of a service provider.

First, the inventive advertisement music downloading method will now be described with reference to FIG. 4.

Referring to FIG. 4, when desiring to download advertisement music of a broadcast advertisement during or after the viewing of the broadcast advertisement, a user inputs an 'ADVERTISEMENT MUSIC' command through the user interface 310 (S10).

When the 'ADVERTISEMENT MUSIC' command is inputted, the controller 350 generates a download request signal and transmits a program ID of a currently-viewed broadcast advertisement and a system ID stored in the storage unit 320 to the service provider 200, together with the generated download request signal (S11).

Upon receiving the download request signal from the controller 350, the service provider 200 searches a music file stored in the database (DB) 100 according to the received download request signal. Thereafter, the service provider 200 transmits the searched music file to the digital TV 300, together with the received system ID.

When receiving a packet stream having an ID identical to its own system ID from the service provider 200 (S12), the controller 350 decompresses the received packet stream and displays, through the display unit 330, detailed information of advertisement music provided from the service provider 200, together with a message for inquiring whether or not to download advertisement music (S13) .

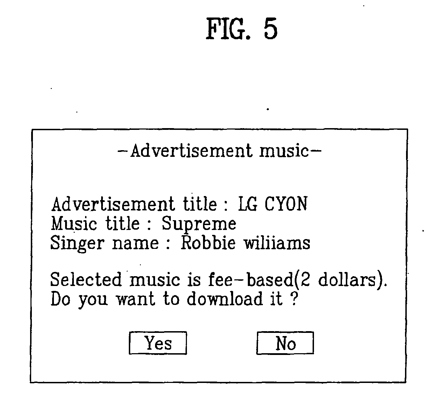

That is, as shown in FIG. 5, the service provider 200 first provides detailed information of advertisement music selected by the user. The detailed information includes a title of a current advertisement, a title of music inserted into the advertisement, a singer name of the advertisement music, and a download fee for the advertisement music. The detailed information is displayed in a menu on the display unit 330.

Thereafter, the controller 350 determines whether the user cancels or requests the downloading of the advertisement music through an inquiry message displayed on the menu (for example, 'SELECTED MUSIC IS FEE-BASED (2 DOLLARS). DO YOU WANT TO DOWNLOAD IT') (S14).

As a result of the determination of Step 14, when the advertisement music downloading is cancelled, the controller 350 clears a menu screen displaying the detailed information of the advertisement music (S15). Otherwise, when the advertisement music downloading is requested, the controller 350 transmits a confirmation signal to the service provider 200, together with a system ID stored in the storage unit 320 (S16).

Upon receiving the system ID and the confirmation signal from the controller 350, the service provider 200 transmits a corresponding music file to the controller 350, together with the system ID.

When receiving a packet stream having an ID identical to its own system ID (S17), the controller 350 decompresses the received packet stream and stores a music file received from the service provider 200 in the storage unit 320 (S18) .

When the user selects a music file stored in the storage unit 320, the music player 340 plays the selected music file.

An inventive advertisement music providing method for the inventive advertisement music downloading method will now be described with reference to FIG. 6.

Referring to FIG. 6, the service provider 200 determines whether or not a download request signal is received from the digital TV 300 (i.e., a service subscriber) (S20).

As a result of the determination of Step 20, when the download request signal is received from the digital TV 300, the service provider 200 checks a program ID and a system ID received together with the download request signal and thereby determines whether or not advertisement music inserted into a broadcast advertisement corresponding to the received program ID (i.e., a current-viewed broadcast advertisement) exists in the database 100 (S21 and S22).

As a result of the determination of Step 22, when a music file of the broadcast advertisement corresponding to the program ID does not exit in the database 100, the service provider 200 requests a manager to register the corresponding advertisement music (S23). Also, the service provider 200 transmits the result of the advertisement music registration request to the digital TV having the received system ID (S24). At this time, when receiving the registration request results having an ID identical to its own system ID, the digital TV 300 displays the registration request results in a menu on the display unit 330. That is, according to the registration request results received from the service provider 200, the digital TV 300 displays a message indicating the non-existence of the advertisement music selected by the user (for example, 'SELECTED ADVERTISEMENT MUSIC IS NOT YET REGISTERED AND IS THUS BEING REQUESTED TO BE REGISTERED. PLEASE TRY AGAIN LATER')

Meanwhile, as a result of the determination of Step 22, when the music file of the broadcast advertisement corresponding to the program ID exits in the database 100, the service provider 200 reads detailed information of the corresponding advertisement music from the database 100. Thereafter, the service provider 200 converts the read detailed information into a packet stream, adds the received system ID to the packet stream, and transmits the resulting packet stream to the digital TV 300 (S25). At this point, the service provider 200 transmits the detailed information to the digital TV 300 through the Internet.

Thereafter, when receiving the confirmation signal form the digital TV 300 (S26), the service provider 200 reads a corresponding advertisement music file from the database 100, converts the read advertisement music into a packet stream, adds the received system ID to the packet stream, and transmits the resulting packet stream to the digital TV 300 (S27).

At this time, the service provider 200 may transmit information representing the download time duration and speed of a requested advertisement music file, and can charge a service fee for advertisement music provided to a service subscriber. The display device may optionally include a memory for storing the music file for discontinuous playback or playback of the music file at a time period after the downloading of the music file.

As described above, the inventive advertisement music providing system and method provides the user with detailed information of requested advertisement music. Accordingly, the user can conveniently identify and download the advertisement music through the detailed information.

It will be apparent to those skilled in the art that various modifications and variations can be made in the present invention. Thus, it is intended that the present invention covers the modifications and variations of this invention provided they come within the scope of the appended claims and their equivalents.

## Claims

1. A method for providing advertisement music, the method comprising the steps of:
broadcasting a broadcast advertisement at a broadcasting station, the broadcast advertisement including music and a program ID (identification);
transmitting a download request signal from a display device to the broadcasting station so as to download the music of the broadcast advertisement, the download request signal including the program ID and a user ID;
detecting a music file stored in the broadcasting station on the basis of the either the program ID or the user ID received from the display device; and
transmitting the detected music file from the broadcasting station to the display device.

2. The method according to claim 1, wherein the download request signal is transmitted via the Internet to a server of the broadcasting station.

3. The method according to claim 1, wherein the detected music file is transmitted from the broadcasting station to the display device, together with the user ID received from the display device.

4. The method according to claim 1, wherein the detected music file is transmitted from the broadcasting station to the display device on a broadcast channel.

5. The method according to claim 1, wherein the detected music file is transmitted from the broadcasting station to the display device via the Internet.

6. The method according to claim 1, further comprising the steps of:
detecting music information stored in the broadcasting station on the basis of the program ID received from the display device; and
transmitting the detected music information to the display device.

7. The method according to claim 1, further comprising selectively transmitting the music file in response to a user input, wherein the music file is selected according to at least one subcategory of the group consisting of an advertisement title, a music title, an artist ID and a service fee.

8. A system for providing advertisement music, the system comprising:
a display device for transmitting a download request signal to a broadcasting station server so as to download music contained in a broadcast advertisement, the download request signal including a user ID and a program ID contained in the broadcast advertisement;
a database for storing music files related to the broadcast advertisement; and
the broadcasting station server for detecting a corresponding music file from the database on the basis of the program ID. received from the display device, and transmitting the detected music file to the display device.

9. The system according to claim 8, wherein the display device transmits the download request signal to the broadcasting station server via the Internet.

10. The system according to claim 8, wherein the broadcasting station server transmits the detected music file to the display device, together with the user ID received from the display device.

11. The system according to claim 8, wherein the broadcasting station server transmits the detected music file to the display device on a broadcast channel.

12. The system according to claim 8, wherein the broadcasting station server transmits the detected music file to the display device via the Internet.

13. The system according to claim 8, wherein the broadcasting station server detects corresponding music information from the database on the basis of the program ID received from the display device, and transmits the detected music information to the display device.

14. A method for obtaining advertisement music, the method comprising the steps of:
transmitting a download request signal from a display device to a broadcasting station broadcasting an advertisement having music and a program ID, the download request signal including the program ID and a user ID;
detecting a music file stored in the broadcasting station on the basis of the either the program ID or the user ID received from the display device; and
transmitting the detected music file from the broadcasting station to the display device.

15. The method according to claim 14, further comprising selectively transmitting the music file in response to a user input, wherein the music file is selected according to at least one subcategory of the group consisting of an advertisement title, a music title, an artist ID and a service fee.

16. The method according to claim 1, further comprising storing the music file within a memory of the display device.

17. The method according to claim 14, further comprising storing the music file within a memory of the display device.
